# EUROPEAN PATENT SPECIFICATION

(11) **EP 0 548 449 B1**
(45) Date of publication and mention of the grant of the patent: **03.07.1996**
(21) Application number: 92107341.7
(22) Date of filing: 29.04.1992
(51) Int. Cl.: H01M 10/40, H01M 4/58, H01M 4/48

(54) **Nonaqueous electrolyte secondary batteries**
Akkumulatoren mit nichtwässrigem Elektrolyt
Accumulateurs à électrolyte non-aqueux

(30) Priority: 27.12.1991 JP 346012/91
(43) Date of publication of application: 30.06.1993
(73) Proprietor: MATSUSHITA ELECTRIC INDUSTRIAL CO., LTD., Kadoma-shi, Osaka-fu, 571 (JP); MITSUBISHI CHEMICAL CORPORATION, Chiyoda-ku, Tokyo (JP)
(72) Inventor: Okuno, Hiromi, Abeno-ku, Osaka-shi (JP); Koshina, Hizuru, Neyagawa-shi (JP); Hasegawa, Katsuaki, Yokkaichi-shi (JP)
(74) Representative: Patentanwälte Leinweber & Zimmermann

(56) References cited:
- EP-A- 0 394 917

## Description

### BACKGROUND OF THE INVENTION

### FIELD OF THE INVENTION

The present invention relates to nonaqueous electrolyte secondary batteries and in particular to improvements of the cycle life, high-temperature storage stability and low-temperature capacity characteristics of the batteries.

### DESCRIPTION OF RELATED ART

With recent rapid progress in development of portable or cordless electronic equipments, there have been desired small and light-weight secondary batteries having a high energy density as electric sources for driving of these electronic equipments. In this respect, nonaqueous electrolyte secondary batteries, especially lithium secondary batteries are expected as batteries having a high voltage and high energy density.

When the nonaqueous electrolyte secondary batteries are fabricated, use of active materials for cathode of high capacity and high voltage is required. As materials which meet these requirements, mention may be made of those which show a high voltage of 4 V, such as LiCoO₂, LiNiO₂, LiFeO₂ and LiMn₂O₄.

On the other hand, metallic lithium, lithium alloys and carbon materials capable of doping and undoping lithium ions are studied as anode materials. However, metallic lithium has a problem of shortcircuit caused by dendrites produced by charging and discharging, and lithium alloys have a problem of collapse of electrodes due to expansion and contraction caused by charging and discharging. Accordingly, recently, carbon materials which have no such problems are considered hopeful as anode materials of lithium secondary batteries.

It has been well known that when metallic lithium is used as anode materials, active dendrites produced on the surface of anode in charging react with a nonaqueous solvent to bring about decomposition reaction of a part of the solvent, resulting in reduction of charging efficiency. For solving this problem, Japanese Patent KOKAI (Laid-Open) No. Sho 57-170463 has proposed to use a mixed solvent comprising ethylene carbonate and propylene carbonate in view of excellent charging efficiency of ethylene carbonate. Japanese Patent KOKAI (Laid-Open) No. Hei 3-55770 has proposed to use a mixture of a mixed solvent comprising ethylene carbonate and diethyl carbonate with 2-methyltetrahydrofuran, 1,2-dimethoxyethane, 4-methyl-1,3-dioxorane or the like as a solvent for the nonaqueous electrolyte in order to improve the low-temperature characteristics of batteries. Furthermore, U.S.Patent No. 4,804,596 has proposed to use, as solvents for the nonaqueous electrolyte, those which contain esters such as methyl acetate and methyl formate as a base which are high in oxidation resistance and provide a high electric conductivity in order to improve high-rate discharging characteristics and low-temperature characteristics of batteries.

However, even when these solvents are used, a charging efficiency obtainable is at most about 98-99%, and a charging efficiency has not yet been sufficiently enhanced. This is the same when a lithium alloy is used for anode.

When a carbon material is used for anode materials, the charging reaction is such that lithium ions in the electrolyte are intercalated between layers of the carbon material and so dendrites of lithium are not produced and thus the decomposition reaction of solvent on the surface of anode as referred to above should not take place. However, actually, charging efficiency does not reach 100% and there still remain the same problems as when lithium or a lithium alloy is used for anode.

Generally, a requirement for an excellent solvent of electrolyte for lithium batteries is that they have a high dielectric constant, namely, they can dissolve a large amount of an inorganic salt which is a solute. Cyclic carbonates such as propylene carbonate and ethylene carbonate and cyclic esters such as γ-butyrolactone and γ-valerolactone are said to be excellent solvents which satisfy the above requirement, but have the problem that when carbon materials are used for anode materials, the decomposition reaction of solvent takes place in charging as mentioned above. Moreover, since the solvents above are highly viscous, there are problems that when they are used simply, the viscosity of the electrolytes is high and there is a difficulty in charging and discharging at a high rate and besides, a capacity at low temperatures is low. Especially, ethylene carbonate which is a cyclic carbonate has a high freezing point of 36.4°C and this cannot be used simply.

On the other hand, the decomposition reaction of chain carbonates in charging occurs with difficulty because of their structure, but these solvents have the defect that they are relatively low in dielectric constant and dissolve, with difficulty, the inorganic salt which is a solute and have the problem that many of them are relatively low in boiling point and so they are difficult to handle in fabrication of batteries.

Furthermore, when mixtures of these cyclic and chain carbonates are used, the above-mentioned problems in case of using these compounds each simply are diminished and excellent charge-discharge cycle life characteristics can be obtained but high-rate charge and discharge characteristics and low-temperature charge and discharge characteristics are insufficient. Usually, ethers of low freezing point and low viscosity are added to solvents used for electrolytes in order to improve the low-temperature characteristics of lithium batteries. However, ethers are generally low in oxidative decomposition voltage and when the above-mentioned lithium-containing oxides having a high voltage such as LiCoO₂, LiNiO₂, LiFeO₂ and LiMn₂O₄ are used as active materials for cathode, the decomposition reaction of the solvents is brought about in charging of batteries.

### SUMMARY OF THE INVENTION

The present invention has solved the above-mentioned problems.

That is, the first object of the present invention is to provide nonaqueous electrolyte secondary batteries which have a long life and are excellent in retention of capacity at low temperatures.

The second object of the present invention is to provide a novel solvent composition for nonaqueous electrolytes which is preferred for nonaqueous electrolyte secondary batteries.

### BRIEF DESCRIPTION OF THE DRAWINGS

Fig. 1 is a longitudinal cross-sectional view of the cylindrical battery used in examples of the present invention.

Fig. 2 is a graph which shows a change of the discharge capacity with the number of charge-discharge cycles at 20°C in the batteries of Example 1.

Fig. 3 is a graph which shows a change of the discharge voltage at -10°C of the batteries in Example 2.

Fig. 4 is a graph which shows the discharge capacity of the batteries before and after stored in Example 2.

Fig. 5 is a graph which shows the cycle life at 20°C of the batteries in Example 3.

Fig. 6 is a graph which shows a change of the discharge voltage at -10°C of the batteries in Example 3.

Fig. 7 is a graph which shows the cycle life at 20°C of the batteries in Example 4.

Fig. 8 is a graph which shows a change of the discharge voltage at -10°C of the batteries in Example 4.

Fig. 9 is a graph which shows the cycle life at 20°C of the batteries in Example 5.

Fig. 10 is a graph which shows a change of the discharge voltage at -10°C of the batteries in Example 5.

### DETAILED DESCRIPTION OF PREFERRED EMBODIMENTS

As a result of intensive research conducted by the inventors in an attempt to solve the above-mentioned problems and to obtain nonaqueous electrolyte secondary batteries sufficiently enhanced in charging efficiency, they have come to consider that the phenomenon that the charging efficiency cannot be sufficiently enhanced even if carbon materials are used as anode materials does not occur owing to the decomposition reaction of the solvent on the surface of anode as in the case of using metallic lithium for the anode, but occurs owing to the fact that when the lithium is intercalated between layers of carbon material of anode, not only the lithium, but also the solvent which coordinates with the lithium are intercalated between the layers to bring about partial decomposition reaction of the solvent. That is, a solvent having a large molecular radius is not smoothly intercalated between the layers of the carbon material of anode, but is decomposed at the entrance of the layers. On the other hand, when cyclic esters having a high dielectric constant and considered to be preferable are compared with each other, it has been found that γ-butyrolactone and γ-valerolactone having only one oxygen in the 5-membered ring are unstable and readily decomposed during charging and discharging of batteries while propylene carbonate, ethylene carbonate and vinylene carbonate containing two oxygens, especially ethylene carbonate having a bilaterally symmetric structure are relatively stable in charge-discharge cycle.

In order to attain the above objects, according to the present invention, a three-component mixed solvent comprising an aliphatic carboxylate, a cyclic carbonate and a chain carbonate is used as a solvent for electrolytes. Especially, it has been found that preferred electrolytes for the nonaqueous electrolyte secondary batteries are obtained when the proportion of the aliphatic carboxylate is 10-60% by volume, that of the cyclic carbonate is 20-50% by volume and that of the chain carbonate is 20 to 70% by volume based on the total solvent components. Thus, the present invention has been accomplished.

Furthermore, an electrolyte having the most preferred characteristics has been obtained when it contains as a solvent a mixture of methyl butyrate as the aliphatic carboxylate, ethylene carbonate as the cyclic carbonate and diethyl carbonate as the chain carbonate at a mixing volume ratio of 2:3:5 or 1:3:6 and it contains lithium hexafluorophosphate as a solute.

In a solvent for electrolyte, the cyclic carbonate has an effect to increase the electric conductivity of the electrolyte by dissolving a large amount of an inorganic salt as a solute and the chain carbonate can inhibit decomposition of the solvent because it coordinates with lithium in charging of batteries and can easily enter between layers of a carbon material. By further adding thereto a suitable amount of the aliphatic carboxylate having a high decomposition voltage, a low freezing point and a low viscosity, the freezing point and viscosity of the whole electrolyte can be lowered and, as a result, the batteries exhibit excellent low-temperature characteristics.

Among the aliphatic carboxylates represented by the formula of RCOOR', those in which R is hydrogen or a methyl group such as methyl formate and methyl acetate have a high reactivity with lithium, and this problem is not solved even when the carbon materials are used for anode, and the battery characteristics are greatly deteriorated especially when the batteries are used at high temperatures where the chemical reaction rate is high or stored at high temperatures. It has been found that this reaction depends greatly upon R in the formula of RCOOR', and when R contains 2 or more carbon atoms, the reactivity with lithium is much lowered. R' participates in structural stability and viscosity of solvent and with increase in carbon number of R' the solvent tends to become structurally unstable and increase in viscosity. Therefore, it has been found that the carbon number in R' is preferably 1 or 2.

Furthermore, according to the present invention, npnaqueous electrolyte secondary batteries having excellent cycle life characteristics, high-rate charge and discharge characteristics, low-temperature characteristics and stability at high temperatures are provided by using as a solvent for electrolyte a mixed solvent comprising a cyclic carbonate, for example, propylene carbonate or ethylene carbonate and a chain carbonate, for example, diethyl carbonate or dimethyl carbonate to which a suitable amount of an aliphatic carboxylate having 3 or more carbon atoms in R, for example, methyl butyrate or ethyl butyrate is added.

In order to find the solvents for electrolyte stable during charging and discharging of batteries, the inventors made cylindrical batteries using three solvents of propylene carbonate alone, a mixture of propylene carbonate and ethylene carbonate and γ-butyrolactone alone, and examined cycle life of these batteries. As a result, the mixed solvent of propylene carbonate and ethylene carbonate gave the longest life and γ-butyrolactone gave the shortest life. Accordingly, it can be said that ethylene carbonate is most stable during charging and discharging of the batteries. In the above test, ethylene carbonate was used in admixture with propylene carbonate because ethylene carbonate has a high melting point and solidifies at room temperature when used alone.

Construction of the battery used in the test will be explained referring to the accompanying drawing.

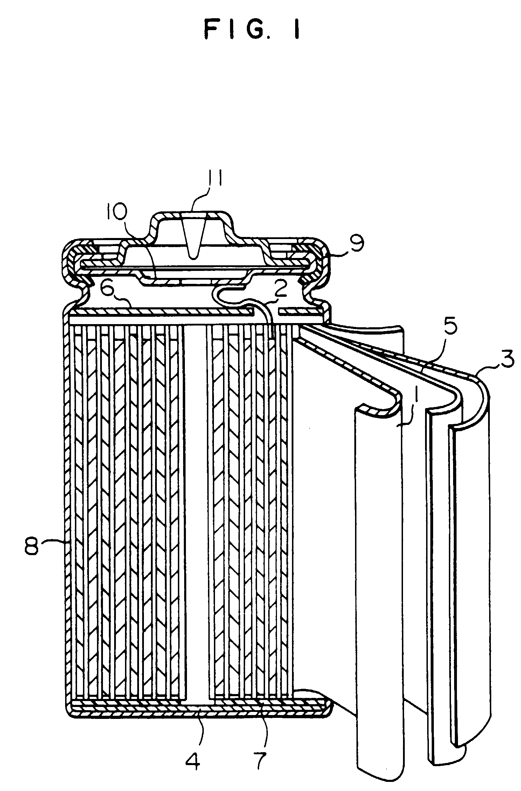

Fig. 1 is a longitudinal cross-sectional view of the cylindrical battery. In Fig. 1, 1 indicates a cathode. This cathode is produced by coating on both the sides of an aluminum foil a mixture comprising LiCoO₂ as an active material, carbon black as a conducting material and an aqueous dispersion of polytetrafluoroethylene as a binder at a weight ratio of 100:3:10, drying and rolling the coated foil, and then cutting it to a given size. To this cathode is spot welded titanium lead plate 2. The mixing ratio of the aqueous dispersion of polytetrafluoroethylene as binder is calculated as solid content. Anode 3 is produced by coating on both the sides of a nickel foil a mixture comprising a carbonaceous material, preferably spheroidal graphite and an acrylic binder at a weight ratio of 100:5, drying and rolling the coated foil, and then cutting it to a given size. To this anode is also spot welded nickel lead plate 4 for anode. Polypropylene microporous film separator 5 is provided between cathode 1 and anode 3, and these are rolled in the form of a spiral to constitute a plate group. Polypropylene insulating sheets 6, 7 are provided at the upper and lower ends of the plate group, respectively and this plate group is packed in case 8 made of nickel-plated iron. Positive electrode lead 2 is spot welded to titanium sealing plate 10 and anode lead 4 is spot welded to the bottom of case 8. Then, a given amount of an electrolyte is poured thereinto and the battery is sealed by sealing plate 10 through gasket 9 to complete a battery. The numeral 11 indicates a cathode terminal and case 8 serves as an anode terminal. This battery has a size of 14 mm in diameter and 50 mm in height.

The cylindrical batteries used in the following examples had the same construction as mentioned above.

### Example 1

The same cylindrical batteries as mentioned above were made by way of experiment using a mixture of ethylene carbonate (hereinafter referred to as "EC") exhibiting the best characteristics among the cyclic carbonates used in the above-mentioned test and investigation and the following solvent at a volume ratio of 30:70. That is, methyl acetate (hereinafter referred to as "MA") as an aliphatic carboxylate was used in admixture with EC in battery A, methyl butyrate (hereinafter referred to as "MB") as an aliphatic carboxylate was used in admixture with EC in battery B, and diethyl carbonate (hereinafter referred to as "DEC") as a chain carbonate was used in admixture with EC in battery C. As a solute for the electrolyte, lithium hexafluorophosphate was used in all of the batteries with a concentration adjusted to 1 mol/l.

The electric capacity of batteries A-C depend on the discharge capacity of LiCoO₂ used as an active material of cathode and the discharge capacity of each of the batteries is determined as 500 mAh assuming that the electron number of the reaction of LiCoO₂ is 0.45.

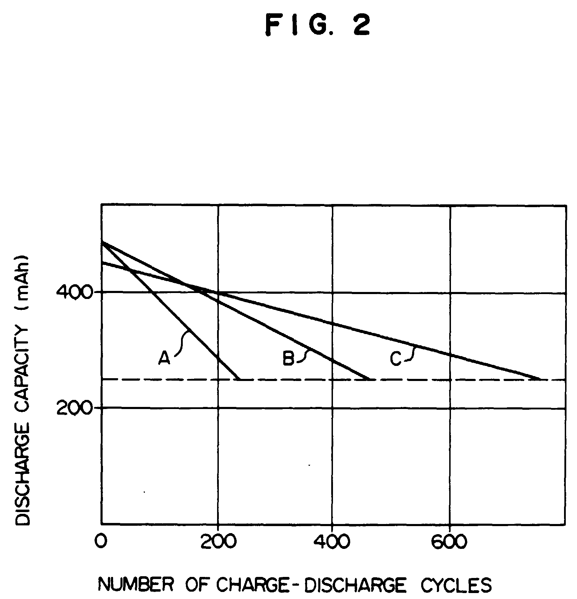

The evaluated battery characteristic was a charge-discharge cycle life characteristic at 20°C. Test conditions were charging and discharging current: 100 mA, final charge voltage: 4.1 V, final discharge voltage: 3.0 V and the charging and discharging were repeated and the test was terminated when the discharge capacity deteriorated to less than 250 mAh. Comparison was made on the number of cycles at that time. The results are shown in Fig. 2.

As can be seen from Fig. 2, the cycle lifes of the batteries A-C were lowered in the order of C-B-A with C being the best. That is, among the solvents used in admixture with EC, DEC as a chain carbonate gave the best characteristic, methyl butyrate as an ester gave the characteristic next to that given by DEC and methyl acetate as an ester gave the characteristic next to that given by methyl butyrate. From these results, it can be considered that with increase of the carbon number contained in R of the aliphatic carboxylate of RCOOR', the reactivity of the solvent with lithium decreases, and the decomposition of the solvent caused with progress of charge-discharge cycles is inhibited, resulting in relatively good cycle life characteristics. Since the chain carbonates are more stable against lithium than the aliphatic carboxylates, the cycle life characteristic of battery C was the best.

### Example 2

Cylindrical batteries A'-C' were made using the same electrolytes as used in Example 1 and these were subjected to the low-temperature test and shelf life test. First, the low-temperature test was conducted and then, the shelf life test was conducted. Ten cycles of charge-discharge of these batteries were repeated at 20°C under the same conditions as in Example 1 and then, the test was stopped in a charged state. Thereafter, discharge was carried out at -10°C under the same conditions and low-temperature characteristic was evaluated by the discharge capacity obtained. Then, the temperature was returned to 20°C and ten cycles of charge-discharge were carried out under the same conditions. The test was stopped in a charged state and the batteries were left to stand for 1 month at 60°C. Thereafter, the discharge was carried out under the same conditions and the shelf life characteristic was evaluated by the capacity.

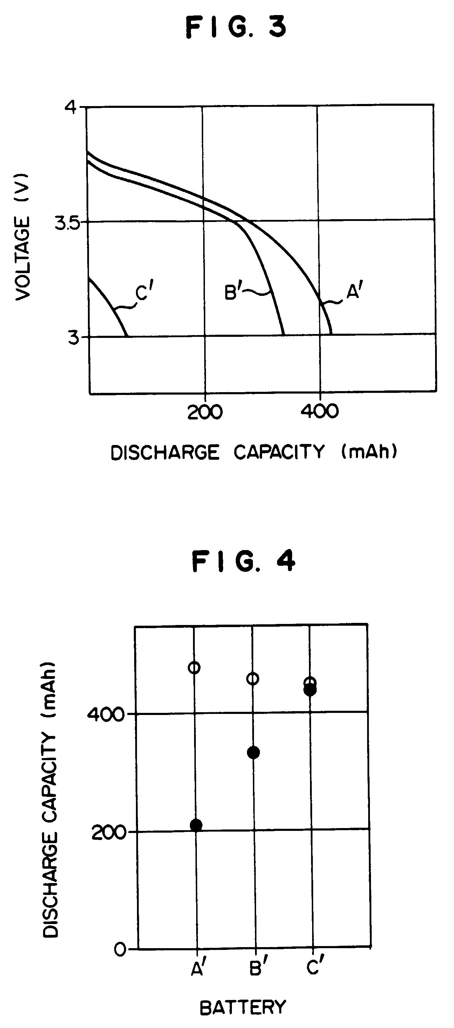

The low-temperature characteristics of batteries A'-C' are shown in Fig. 3 and the shelf life characteristics are shown in Fig. 4.

It can be seen from Fig. 3 that the low-temperature characteristics of these batteries A'-C' were lowered in the order of A'-B'-C' with A' being the best. This is because with decrease of the carbon number contained in R of the aliphatic carboxylate of RCOOR' mixed with EC, the solvent is lower in viscosity, resulting in increase of electric conductivity at low temperatures. Furthermore, for the aliphatic carboxylate and the chain carbonate, the former gave superior low-temperature characteristic. This is also because the aliphatic carboxylate increases electric conductivity at low themperatures than the chain carbonate.

Next, as shown in Fig. 4, the shelf lifes of the batteries A'-C' were lowered in the order of C'-B'-A' with C' being the best. Battery A' was especially inferior and capacity thereof after stored at high temperatures decreased to less than 50% of the capacity before stored. On the other hand, batteries B' and C' maintained capacities of about 70% and more than 90%, respectively. From these results it can be seen that the aliphatic carboxylates of RCOOR' where the carbon number contained in R is 3 or more provide relatively good shelf life characteristic at high temperatures when used in admixture with EC as a solvent for electrolyte. On the other hand, battery C' where the chain carbonate was used was further higher in capacity after stored as compared with the battery where the aliphatic carboxylate was used and thus, good shelf life characteristic at high temperatures was obtained.

From the results of Examples 1 and 2, relatively good results were obtained in all of the cycle life characteristic, low-temperature characteristic and high-temperature shelf life characteristic when EC and methyl butyrate which is the aliphatic carboxylate of RCOOR' where the carbon number contained in R is 3 or more were used as solvent for electrolyte. However, it can be said that there remain problems in cycle life characteristic and high-temperature shelf life characteristic.

### Example 3

The same cylindrical batteries as mentioned above were made using the three-component solvents comprising EC, MB and DEC used in Examples 1 and 2 at the following five volume ratios Lithium hexafluorophosphate was used as a solute of electrolyte as in Examples 1 and 2 with a concentration adjusted to 1 mol/l.

| | |
|---|---|
| Battery D | EC:MB:DEC = 1:5:4 |
| Battery E | EC:MB:DEC = 2:4:4 |
| Battery F | EC:MB:DEC = 3:3:4 |
| Battery G | EC:MB:DEC = 4:2:4 |
| Battery H | EC:MB:DEC = 5:1:4 |
| Battery I | EC:MB:DEC = 6:0:4 |

The conditions other than the electrolytes mentioned above were the same as in Examples 1 and 2.

The evaluated battery characteristics were a cycle life characteristic and low-temperature characteristic. First, ten cycles of the charge-discharge of the batteries were repeated at 20°C under the same conditions as in Examples 1 and 2 and then, the test was stopped in a charged state. Thereafter, discharge was carried out at -10°C under the same conditions and low-temperature characteristic was evaluated by the discharge capacity obtained. Then, the temperature was returned to 20°C, and the charging and discharging were repeated under the same conditions. The test was terminated when the discharge capacity deteriorated to less than 250 mAh and the number of cycles at that time were compared.

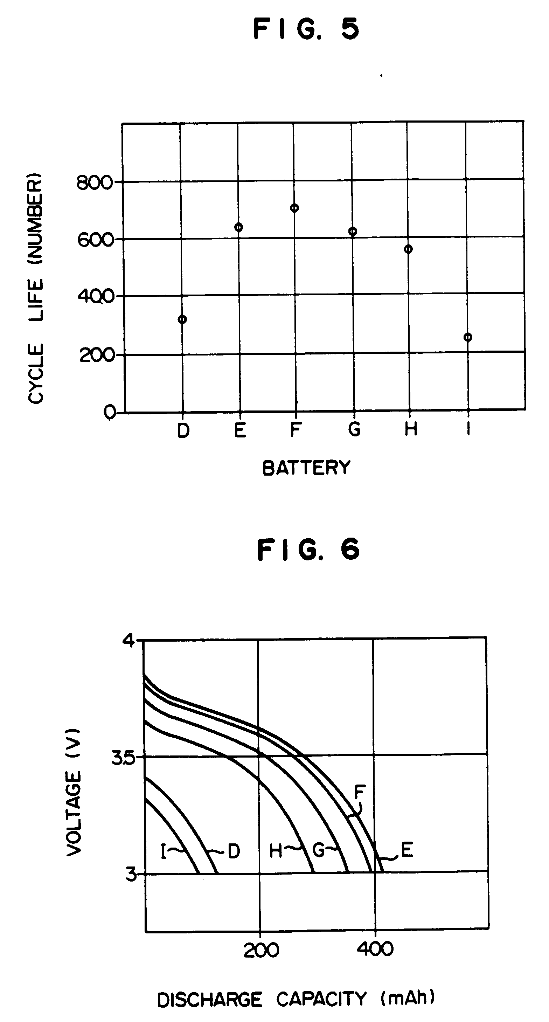

The cycle life characteristic and the low-temperature characteristic of batteries D-I are shown in Fig. 5 and Fig. 6, respectively.

As shown in Fig. 5, the cycle lifes of the batteries D-I were lowered in the order of F-E-G-H-D-I with F being the best. It is considered that this is because of the shortening of the cycle life with increase in the proportion of EC owing to the decomposition with progress of charge-discharge cycles due to the cyclic structure of EC as mentioned herebefore and the shortening of the cycle life owing to reduction of electric conductivity when the proportion of EC is too low, and further because of the reactivity when MB increases.

As shown in Fig. 6, with reference to the low-temperature characteristics, batteries E, F, G and H were superior and D and I were inferior. The reason for I being inferior is considered that since the mixing ratio of EC was high and MS was not contained, the electrolyte increased in viscosity at low temperatures and polarization of the battery increased and, as a result, the discharge capacity decreased. On the other hand, it is considered that in battery D, since the mixing ratio of EC having a high dielectric constant was low, it had no ability to dissolve a given amount of a solute at low temperatures to cause the precipitation of the solute and liquid resistance increased to bring about increase of polarization.

Accordingly, suitable mixing ratio of EC is considered to be in the range of about 20-50%.

### Example 4

The same cylindrical batteries as above were made using as electrolytes the following six mixed solvents prepared by combination of the three components of EC, MB and DEC as in Examples 1-3. Lithium hexafluorophosphate was used as solute of electrolytes as in Examples 1-3 with a concentration adjusted to 1 mol/l.

| | |
|---|---|
| Battery J | EC:MB:DEC = 1:4.5:4.5 |
| Battery K | EC:MB:DEC = 2:4.0:4.0 |
| Battery L | EC:MB:DEC = 3:3.5:3.5 |
| Battery M | EC:MB:DEC = 4:3.0:3.0 |
| Battery N | EC:MB:DEC = 5:2.5:2.5 |
| Battery O | EC:MB:DEC = 6:2.0:2.0 |

The constituting conditions and test conditions other than the electrolytes mentioned above were the same as in Example 3.

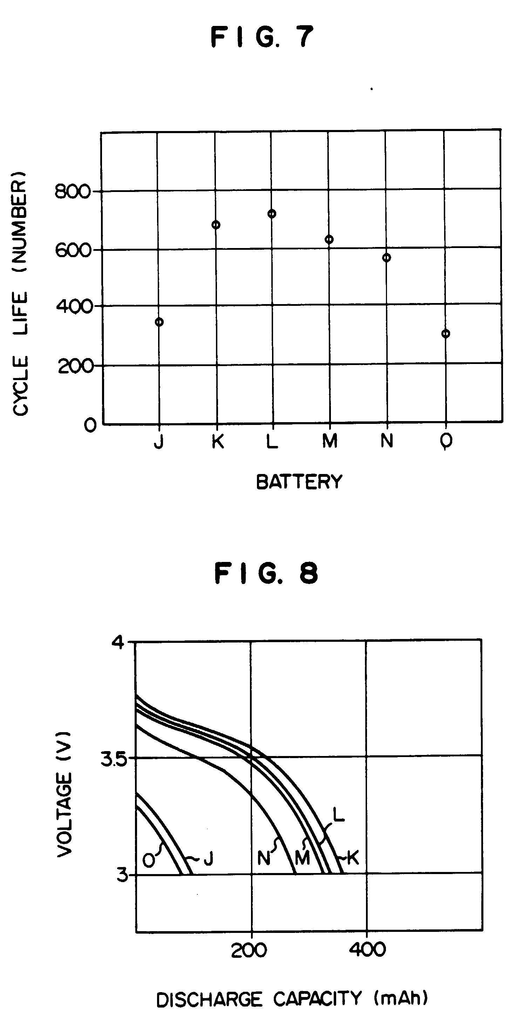

The cycle life characteristic and the low-temperature characteristic of batteries J-O are shown in Fig. 7 and Fig. 8, respectively.

As shown in Fig. 7, the cycle lifes of the batteries J-O were lowered in the order of L-K-M-N-J-O with L being the best. This result shows that how decomposition of EC caused by the charge-discharge cycle and reactivity of MB can be inhibited depends on selection of mixing ratio of the most stable DEC.

Furthermore, the mixing ratio of EC was suitably 20-50% as in Example 3 and it is considered that when it was less than the range, electrical conductivity decreased to give adverse effect on the cycle life and when it was more than the range, the degree of decomposition of EC increased to cause increase of cycle deterioration.

As shown in Fig. 8, the low-temperature characteristics of the batteries were lowered in the order of K-L-M-N-J-O with K being the best and batteries J and O were especially inferior. The reason for battery O being inferior is considered that because of the high mixing ratio of EC, the electrolyte increased in its viscosity at low temperatures to cause increase of polarization of the battery and as a result discharge capacity decreased. The reason for battery J being inferior is considered that because of the low mixing ratio of EC having high dielectric constant, the solvent lost the ability to dissolve a given amount of solute at low temperatures and precipitation of the solute occurred to increase resistance of liquid, resulting in increase of polarization.

From Examples 3 and 4, it can be seen that the optimum mixing ratio of EC in the three-component solvents comprising aliphatic carboxylates, cyclic carbonates and chain carbonates is 20-50% based on the total solvent components.

### Example 5

The same cylindrical batteries as mentioned above were made using as electrolytes the following four mixed solvents prepared by combination of the three components of EC, MB and DEC as in Examples 4. Lithium hexafluorophosphate was used as solute of the electrolytes as in Examples 1-4 with adjusting the concentration to 1 mol/l.

| | |
|---|---|
| Battery P | EC:MB:DEC = 2:0.5:7.5 |
| Battery Q | EC:MB:DEC = 2:1.0:7.0 |
| Battery R | EC:MB:DEC = 2:4.0:4.0 |
| Battery S | EC:MB:DEC = 2.6.0:2.0 |

The constituting conditions and test conditions other than the electrolytes mentioned above were the same as in Examples 3 and 4.

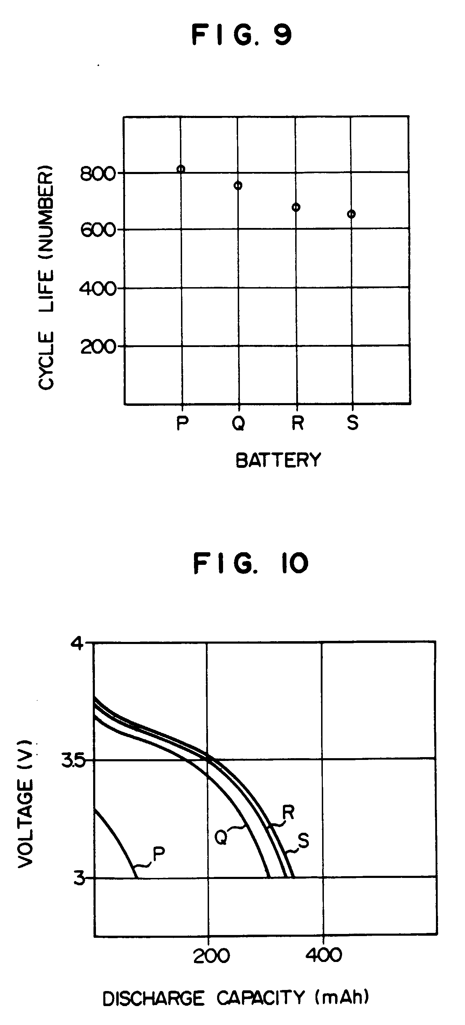

The cycle life characteristic and the low-temperature characteristic of batteries P-S are shown in Fig. 9 and Fig. 10, respectively.

As shown in Fig. 9, the cycle lifes of the batteries P-S were lowered in the order of P-Q-R-S with P being the best. The cycle life lengthened with reducing the mixing ratio of MB and with increasing the mixing ratio of DEC. This shows that when the ratio of EC is made constant and the effect thereof is reduced, contribution of DEC to improvement of the cycle life characteristic of battery is great.

On the other hand, the low-temperature characteristics of the batteries were lowered in the order of S-R-Q-P with S being the best, and battery P was especially inferior. It is considered that this is because in the battery P the mixing ratio of MB which was a low viscosity solvent was only 5% and hence the electric conductivity at low temperatures was low and capacity was insufficient. On the other hand, in batteries S-R, the effect of addition of MB was recognized and sufficient discharge capacity was obtained.

The above results show that the lower limit of the optimum mixing ratio of MB was 10% of the total solvent and if the mixing ratio was less than the lower limit, the effect of addition of MB was not obtained at low temperatures. Furthermore, from the results of Examples 3 and 4 and those of Example 5, the upper limit of the mixing ratio of DEC was 70%.

Considering the results of the above Examples 1-5 together, it has been found that when good cycle life characteristics and good low-temperature characteristics are necessary in a lithium secondary battery in which a lithium composite oxide having a high potential is used for cathode and a carbon material, preferably a graphite particle is used for anode, this can be attained by using a three-component mixed solvent comprising an aliphatic carboxylate, a chain carbonate and a cyclic carbonate. Among these components, the cyclic carbonate contributes to enhancement of electric conductivity of electrolyte by dissolving the solute in a large amount, the chain carbonate contributes to improvement of the cycle life characteristic owing to its stability and the aliphatic carboxylate contributes to improvement of the low-temperature characteristic. It has also been found that superior characteristics are obtained when the proportion, by volume, of the aliphatic carboxylate in the total solvent components is 10-60%, that of the cyclic carbonate is 20-50% and that of the chain carbonate is 20 to 70%.

In the above Examples, a lithium and cobalt composite oxide was used as active material of the cathode, but the similar results were obtained using other lithium-containing oxides such as, for example, a lithium and manganese composite oxide which are referred to herebefore. Moreover, the similar results were obtained by using these composite oxides in which Co or Mn is partially replaced with other transition metals.

In Examples 1-5, especially, lithium hexafluorophosphate was used as solute in the electrolyte, ethylene carbonate was used as the cyclic carbonate, methyl butyrate was used as the aliphatic carboxylate and diethyl carbonate was used as the chain carbonate as the solvent components of the electrolyte. However, nearly the same results were obtained when other solutes such as lithium borofluoride, lithium perchlorate and lithium trifluoromethanesulfonate were used, or propylene carbonate was used as the cyclic carbonate, ethyl butyrate or ethyl isovalerate was used as the aliphatic carboxylate and dimethyl carbonate was used as the chain carbonate. Furthermore, the effects obtained depending on the mixing ratio of the solvent components were also the same as in the above Examples.

As is clear from the above explanation, the present invention can provide nonaqueous electrolyte secondary batteries excellent in cycle life characteristic and low-temperature characteristic by using three-component mixed solvents comprising an aliphatic carboxylate, a cyclic carbonate a chain carbonate as solvents for electrolytes.

## Claims

1. A nonaqueous electrolyte secondary battery which is provided with an anode comprising a carbon material capable of doping and undoping lithium ions, a nonaqueous electrolyte comprising a solute and a solvent, and a cathode comprising a lithium containing oxide, said solvent being a mixed solvent comprising an aliphatic carboxylate represented by RCOOR' wherein R represents an alkyl group of three or more carbon atoms and R' represents an alkyl group of one or two carbon atoms, a cyclic carbonate and a chain carbonate.

2. A nonaqueous electrolyte secondary battery according to claim 1, wherein said aliphatic carboxylate is methyl butyrate, ethyl butyrate or ethyl isovalerate.

3. A nonaqueous electrolyte secondary battery according to claim 1 or 2, wherein said cyclic carbonate is ethylene carbonate or propylene carbonate.

4. A nonaqueous electrolyte secondary battery according to any preceding claim, wherein said chain carbonate is diethyl carbonate or dimethyl carbonate.

5. A nonaqueous electrolyte secondary battery according to any preceding claim, wherein the proportion of the aliphatic carboxylate in the total solvent components is 10 to 60% by volume, that of the cyclic carbonate is 20-50% by volume and that of the chain carbonate is 20 to 70% by volume.

6. A nonaqueous electrolyte secondary battery according to any preceeding claim, wherein said nonaqueous electrolyte contains as a salt at least one compound selected from the group consisting of lithium hexafluorophosphate, lithium borofluoride, lithium perchlorate and lithium trifluoromethanesulfonate.

7. A nonaqueous electrolyte secondary battery according to any preceeding claim, wherein said cathode comprises an active material selected from a lithium and cobalt composite oxide, a lithium and nickel composite oxide, a lithium and manganese composite oxide, a lithium and iron composite oxide and the composite oxides in which cobalt, nickel, manganese or iron is partially replaced with an other transition metal(s).

8. A nonaqueous electrolyte secondary battery according to claim 5, wherein the nonaqueous electrolyte contains as the solute at least one compound selected from the group consisting of lithium hexafluorophosphate, lithium borofluoride, lithium perchlorate and lithium trifluoromethanesulfonate.

9. A nonaqueous electrolyte secondary battery, wherein said ancde comprises a graphite material capable of doping and undoping lithium ion, active material for cathode is a lithium and cobalt composite oxide, electrolyte is a nonaqueous electrolyte, and solvent of said nonaqueous electrolyte is a mixture of methyl butyrate, ethylene carbonate and diethyl carbonate at a mixing ratio by volume of 2:3:5 and solute of the electrolyte is lithium hexafluorophosphate.

10. A nonaqueous eletrolyte secondary battery according to any of claims 1 to 8, wherein anode comprises a graphite material capable of doping and undoping lithium ion, said cathode is a lithium and cobalt composite oxide, said electrolyte is a nonaqueous electrolyte, and said solvent is a mixture of methyl butyrate, ethylene carbonate and diethyl carbonate at a mixing volume ratio of 1:3:6.

## Patentansprüche

1. Sekundärbatterie mit nichtwässrigem Elektrolyten, versehen mit einer Anode mit einem Kohlenstoffmaterial, das Lithiumionen abgeben und aufnehmen kann, einem nichtwässrigen Elektrolyten mit einem gelösten Stoff und einem Lösungsmittel und einer Kathode mit einem Lithium enthaltenden Oxid, wobei das Lösungsmittel ein Mischlösungsmittel mit einem durch RCOOR' dargestellten aliphatischen Carboxylat, wobei R eine Alkylgruppe mit 3 oder mehr Kohlenstoffatomen und R' eine Alkylgruppe mit 1 oder 2 Kohlenstoffatomen darstellt, einem zyklischen Carbonat und einem Kettencarbonat ist.

2. Sekundärbatterie mit nichtwässrigem Elektrolyten nach Anspruch 1, bei der das aliphatische Carboxylat Methylbutyrat, Ethylbutyrat oder Ethylisovalerat ist.

3. Sekundärbatterie mit nichtwässrigem Elektrolyten nach Anspruch 1 oder 2, bei der das zyklische Carbonat Ethylencarbonat oder Propylencarbonat ist.

4. Sekundärbatterie mit nichtwässrigem Elektrolyten nach einem der vorhergehenden Ansprüche, bei der das Kettencarbonat Diethylcarbonat oder Dimethylcarbonat ist.

5. Sekundärbatterie mit nichtwässrigem Elektrolyten nach einem der vorhergehenden Ansprüche, bei der der Anteil des aliphatischen Carboxylats an den Gesamtlösungsmittelkomponenten 10-60 Vol.% beträgt, der des zyklischen Carbonats 20-50 Vol.% und der des Kettencarbonats 20-70 Vol.%.

6. Sekundärbatterie mit nichtwässrigem Elektrolyten nach einem der vorhergehenden Ansprüche, bei der der nichtwässrige Elektrolyt als Salz zumindest eine aus der Gruppe aus Lithiumhexafluorphosphat, Lithiumfluoborat, Lithiumperchlorat und Lithiumtrifluormethansulfonat ausgewählte Verbindung enthält.

7. Sekundärbatterie nach nichtwässrigem Elektrolyten nach einem der vorhergehenden Ansprüche, bei der die Kathode ein aktives Material aufweist, das ausgewählt ist aus einem Lithium- und Kobaltkompositoxid, einem Lithium- und Nickelkompositoxid, einem Lithium- und Mangankompositoxid, einem Lithium- und Eisenkompositoxid und den Kompositoxiden, bei denen Kobalt, Nickel, Mangan oder Eisen teilweise durch (ein) andere(s) Übergangsmetall(e) ersetzt ist.

8. Sekundärbatterie mit nichtwässrigem Elektrolyten nach Anspruch 5, bei der der nichtwässrige Elektrolyt als gelösten Stoff zumindest eine aus der Gruppe aus Lithiumhexafluorphosphat, Lithiumfluoborat, Lithiumperchlorat und Lithiumtrifluormethansulfonat ausgewählte Verbindung enthält.

9. Sekundärbatterie mit nichtwässrigem Elektrolyten, bei der die Anode ein Graphitmaterial enthält, das Lithiumionen abgeben und aufnehmen kann, das aktive Material für die Kathode ein Lithium- und Kobaltkompositoxid ist, der Elektrolyt ein nichtwässriger Elektrolyt ist und das Lösungsmittel des nichtwässrigen Elektrolyten eine Mischung aus Methylbutyrat, Ethylencarbonat und Diethylcarbonat in einem Volumenmischungsverhältnis von 2:3:5 ist und der gelöste Stoff des Elektrolyten Lithiumhexafluorphosphat ist.

10. Sekundärbatterie mit nichtwässrigem Elektrolyten nach einem der Ansprüche 1-8, bei der die Anode ein Graphitmaterial aufweist, das Lithiumionen abgeben und aufnehmen kann, die Kathode ein Lithium- und Kobaltkompositoxid ist, der Elektrolyt ein nichtwässriger Elektrolyt ist, und das Lösungsmittel eine Mischung aus Methylbutyrat, Ethylencarbonat und Diethylcarbonat in einem Volumenmischungsverhältnis von 1:3:6 ist.

## Revendications

1. Pile secondaire à électrolyte non aqueux, comprenant une anode composée d'une matière carbonée capable de capter et de libérer des ions lithium, un électrolyte non aqueux comprenant un soluté et un solvant, et une cathode composée d'un oxyde contenant du lithium, ledit solvant étant un solvant mixte comprenant un carboxylate aliphatique représenté par RCOOR', où R est mis pour un groupement alkyle à 3 atomes de carbone ou plus et R' est mis pour un groupement alkyle à 1 ou 2 atomes de carbone, un carbonate de méthyle et un carbonate en chaîne.

2. Pile secondaire à électrolyte non aqueux selon la revendication 1, dans laquelle ledit carboxylate aliphatique est le butyrate de méthyle, le butyrate d'éthyle ou l'isovalérate d'éthyle.

3. Pile secondaire à électrolyte non aqueux selon la revendication 1 ou 2, dans laquelle ledit carbonate cyclique est le carbonate d'éthylène ou le carbonate de propylène.

4. Pile secondaire à électrolyte non aqueux selon l'une quelconque des revendications précédentes, dans laquelle ledit carbonate en chaîne est le carbonate de diéthyle ou le carbonate de diméthyle.

5. Pile secondaire à électrolyte non aqueux selon l'une quelconque des revendications précédentes, dans laquelle la proportion du carboxylate aliphatique dans la somme des composants du solvant est comprise entre 10 et 60% en volume, celle du carbonate cyclique est comprise entre 20 et 50% en volume et celle du carbonate en chaîne est comprise entre 20 et 70% en volume.

6. Pile secondaire à électrolyte non aqueux selon l'une quelconque des revendications précédentes, dans laquelle ledit électrolyte non aqueux contient, en tant que sel, au moins un composé choisi dans le groupe constitué par l'hexafluorophosphate de lithium, le borofluorure de lithium, le perchlorate de lithium et le trifluoro-méthanesulfonate de lithium.

7. Pile secondaire à électrolyte non aqueux selon l'une quelconque des revendications précédentes, dans laquelle ladite cathode comprend une matière active choisie parmi un oxyde composite de lithium et de cobalt, un oxyde composite de lithium et de nickel, un oxyde composite de lithium et de manganèse, un oxyde composite de lithium et de fer et les oxydes composites dans lesquels le cobalt, le nickel, le manganèse ou le fer est remplacé partiellement par un autre ou d'autres métaux de transition.

8. Pile secondaire à électrolyte non aqueux selon la revendication 5, dans laquelle l'électrolyte non aqueux contient, en tant que produit dissous, au moins un composé choisi dans le groupe constitué par l'hexafluorophosphate de lithium, le borofluorure de lithium, le perchlorate de lithium et le trifluoro-méthanesulfonate de lithium.

9. Pile secondaire à électrolyte non aqueux, dans laquelle ladite anode comprend une matière du type graphite capable de capter et de libérer des ions de lithium, la matière active de cathode est un oxyde composite de lithium et de cobalt, l'électrolyte est un électrolyte non aqueux, le solvant dudit électrolyte non aqueux est un mélange de butyrate de méthyle, de carbonate d'éthylène et de carbonate de diéthyle dans un rapport volumique de mélange de 2:3:5 et le soluté de l'électrolyte est de l'hexafluorophosphate de lithium.

10. Pile secondaire à électrolyte non aqueux selon l'une quelconque des revendications 1 à 8, dans laquelle l'anode est composée d'une matière du type graphite capable de capter et de libérer des ions lithium, ladite cathode est un oxyde composite de lithium et de cobalt, ledit électrolyte est un électrolyte non aqueux et ledit solvant est un mélange de butyrate de méthyle, de carbonate d'éthylène et de carbonate de diéthyle dans un rapport volumique de mélange de 1:3:6.
